# FASCICULE DE BREVET EUROPEEN

(11) **EP 3 269 576 B1**
(45) Date de publication et mention de la délivrance du brevet: **18.03.2020**
(21) Numéro de dépôt: 17177706.3
(22) Date de dépôt: 23.06.2017
(51) Int. Cl.: B60K 11/08

(54) **GUIDE D'AIR STOCKABLE A PLAT**
FLACH LAGERBARE LUFTFÜHRUNG
FLAT-STORABLE AIR GUIDE

(30) Priorité: 13.07.2016 FR 1656715
(43) Date de publication de la demande: 17.01.2018
(73) Titulaire: RENAULT s.a.s., 92100 Boulogne-Billancourt (FR)
(72) Inventeur: BUI, Joseph, 78130 LES MUREAUX (FR)

(56) Documents cités:
- EP-A2- 1 785 306
- JP-A- 2001 080 371

## Description

La présente invention se rapporte à un guide d'air destiné à être intégré à l'avant d'un véhicule, notamment fixé à une face avant technique de véhicule.

Un tel guide d'air a pour fonction de canaliser l'air pénétrant par au moins une ouverture ou grille d'aération dans la façade avant ou peau de bouclier avant d'un véhicule pour le conduire à un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés. La valise de refroidissement comprend des échangeurs thermiques se composant classiquement du radiateur à eau de refroidissement moteur, éventuellement de l'échangeur air-air (Refroidisseur Air Suralimentation- RAS) et du condenseur.

On appelle dans le métier « face avant technique » (FAT) une structure qui se trouve en avant du bloc moteur et qui a pour fonction de supporter différents organes, principalement le radiateur du bloc moteur, voir par exemple les documents EP1785306 ou JP2001080371.

Les guides d'air actuels se composent en général de plusieurs parois agencées pour former un conduit de guidage de l'air entrant depuis la face avant du véhicule vers l'élément structurel du véhicule récepteur dudit guide. Les parois étant plus ou moins larges, le guide d'air présente donc un certain volume qui peut le rendre encombrant notamment lors de son stockage et de son transport. En outre, le guide d'air est généralement formé par assemblage de plusieurs pièces qui peuvent être en un nombre relativement important, ce qui nécessite un temps de main d'œuvre important et en élève le coût de réalisation.

Il existe donc un besoin pour un guide d'air qui soit facile à stocker et économique à sa réalisation.

L'invention vise à répondre à ce besoin.

A cet effet l'invention fournit un guide d'air, destiné à être intégré à l'avant d'un véhicule entre une face avant dudit véhicule et un échangeur thermique dudit véhicule, présentant un cadre de fixation définissant un plan moyen et une pluralité de parois solidaires dudit cadre de fixation pour former un conduit orienté selon une composante normale audit plan moyen, lesdites parois étant moulées à plat d'une seule pièce avec ledit cadre de fixation selon ledit plan moyen, de manière à pouvoir dresser lesdites parois par rapport audit plan moyen pour former ledit conduit.

Selon un mode de réalisation préféré de l'invention, chaque paroi solidaire du cadre est mobile par rapport audit cadre, entre une position à plat dans ledit plan moyen défini par le cadre et une position dressée, permettant le passage d'une configuration à plat de stockage dudit guide à une configuration en volume d'utilisation dudit guide, par pivotement autour d'une zone d'épaisseur réduite par rapport à l'épaisseur globale de la paroi considérée. Cette zone d'épaisseur réduite forme une charnière moulée entre ledit cadre et ladite paroi.

Selon l'invention, au moins une desdites parois formant le conduit présente une partie principale mobile par rapport audit cadre prolongée par au moins une extrémité mobile par rapport à ladite partie principale de manière à être repliée vers une autre paroi qui lui est adjacente une fois dressée. Avantageusement encore ladite extrémité de paroi est mobile par rapport à ladite partie principale de paroi par pivotement autour d'une zone d'épaisseur réduite par rapport à l'épaisseur globale de ladite paroi, ladite zone formant ainsi une charnière moulée entre ladite extrémité et la partie principale de paroi. L'assemblage des parois entre elles est ainsi consolidé et par conséquent le guide d'air l'est aussi dans sa configuration en volume. Un tel assemblage permet aussi d'assurer une bonne étanchéité à l'air au conduit formé par lesdites parois une fois le guide mis en volume.

Préférentiellement selon l'invention les parois dressées pour former ledit conduit sont solidarisées entre elles, en particulier par solidarisation deux à deux entre parois adjacentes. De préférence selon l'invention, les parois dressées sont rendus solidaires entre elles à l'aide de moyens de verrouillage maintenant deux parois adjacentes ensemble. Lesdits moyens de verrouillage peuvent avantageusement être moulés avec lesdites parois moulées à plat.

Selon un mode particulier de réalisation de l'invention, des parois adjacentes peuvent être solidarisées par une extrémité d'une des parois repliée vers l'autre paroi de manière à solidariser ces deux parois adjacentes par des moyens de verrouillage coopérant entre lesdites parois adjacentes.

Selon un mode de réalisation avantageux de l'invention, le cadre du guide comporte entre outre des butées qui facilitent le positionnement des parois dans leur position dressée respective. Préférentiellement ces butées sont munies de moyens de retenue des parois avec ledit cadre, en particulier par encliquetage. De préférence selon l'invention, lesdites butées de positionnement se présentent sous forme de longerons ou murets moulés le long des montants constitutifs du cadre.

Avantageusement selon l'invention, au moins les charnières moulées entre les parois et le cadre sont d'une épaisseur suffisamment fine pour leur permettre d'être déchirées sous l'effet d'un choc frontal ou de biais reçu par le véhicule auquel est destiné le guide d'air, afin de satisfaire aux exigences des « crash tests » auxquels peuvent être soumis les véhicules automobiles.

De préférence selon l'invention, le guide d'air comporte en outre des moyens de fixation portés par le cadre de fixation, utiles pour fixer ledit guide à un élément récepteur structurel de véhicule auquel il est destiné tel qu'un échangeur thermique, lesdits moyens de fixation étant moulés à plat avec ledit cadre selon le plan moyen défini par ledit cadre de manière à pouvoir orienter lesdits moyens de fixation lors de son intégration en face avant d'un véhicule.

Lesdits moyens de fixation sont avantageusement orientables par pivotement par rapport au cadre, autour d'une zone d'épaisseur réduite par rapport à l'épaisseur globale du cadre formant une charnière moulée entre ledit cadre et lesdits moyens de fixation.

L'invention fournit ainsi un guide d'air se présentant sous forme d'un monobloc réalisé par moulage à plat, en particulier d'un matériau plastique, pouvant passer de manière aisée d'une configuration à plat permettant un stockage facile à une configuration en volume conforme à l'utilisation à laquelle il est destiné.

L'invention concerne aussi un véhicule automobile comprenant au moins un guide d'air tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 représente en perspective un guide d'air selon l'invention dans sa configuration de fabrication à plat pour le stockage;
- la figure 2 schématise une vue en perspective de la mise en volume du guide d'air de la figure 1 pour lui donner sa configuration d'utilisation ;
- les figures 3A et 3B illustrent, selon une vue en perspective, un exemple de bouton de verrouillage entre parois d'un guide d'air selon l'invention ;
- la figure 4 représente, selon une vue en perspective de trois-quarts, le guide d'air des figures 1 et 2 dans sa configuration d'utilisation et monté à l'avant d'un échangeur thermique de véhicule ;
- la figure 5 représente, selon une autre perspective de trois-quarts, le guide d'air représenté monté sur l'échangeur thermique en figure 4.

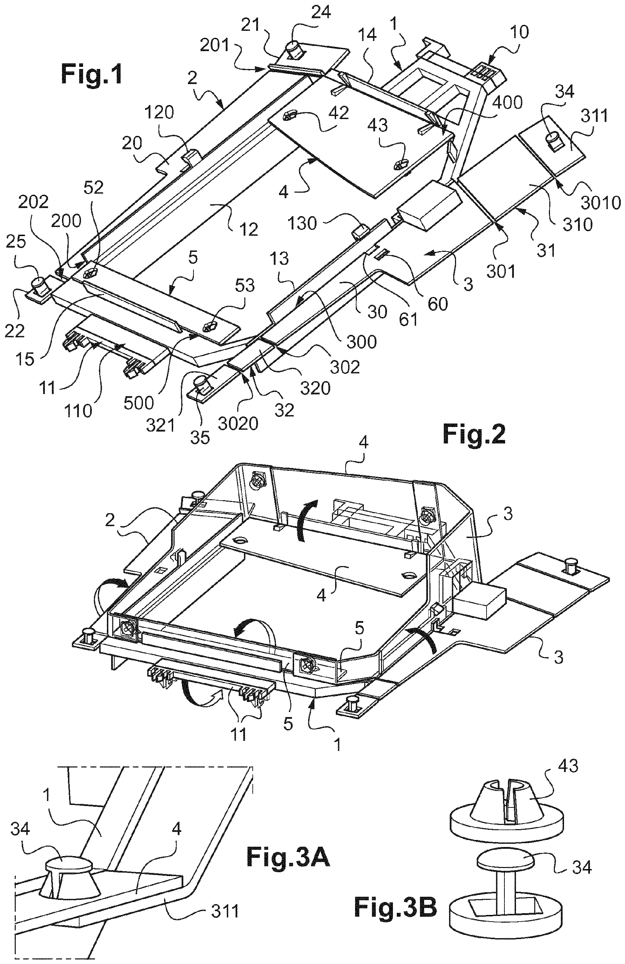

Un exemple non limitatif d'un guide d'air selon l'invention est représenté en figure 1 dans sa configuration à plat pour le stockage, la figure 2 illustrant à l'aide de flèches, selon une vue en perspective, le passage de cette forme à plat vers sa mise en volume pour lui donner sa configuration finale d'utilisation.

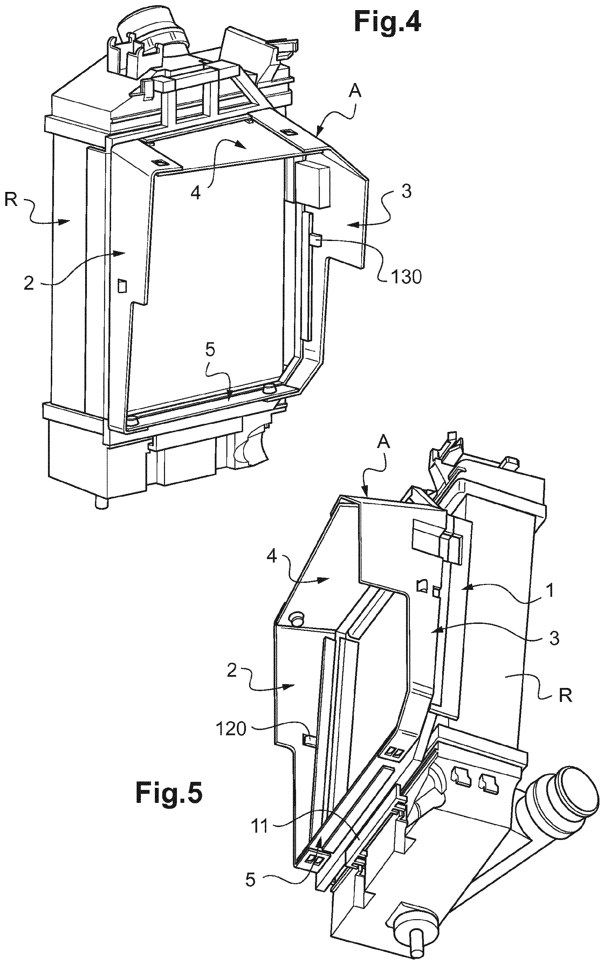

En figures 4 et 5, le guide d'air A est représenté dans sa configuration en volume d'utilisation, fixé, à titre illustratif, sur un élément structurel de véhicule automobile R représenté par un échangeur thermique de type air-air (appelé Refroidisseur Air Suralimentation), ledit guide conduisant l'air entrant depuis la face avant du véhicule non représentée sur les figures vers les tubes de l'échangeur R.

Le guide d'air selon l'invention tel qu'illustré se compose de quatre parois latérales 2, 3, 4, 5, solidaires d'un cadre rigide de fixation 1, lesdites parois étant moulées à plat d'une seule pièce avec ledit cadre de fixation selon ledit plan moyen. Ledit cadre de fixation est en outre muni de moyens de fixation permettant de le monter sur un échangeur thermique en face avant d'un véhicule comme illustré aux figures 4 et 5.

Selon l'exemple de l'invention, les quatre parois latérales se composent de deux parois latérales globalement longitudinales 2 et 3, sensiblement parallèles entre elles et opposées, qui sont sensiblement verticales dans sa configuration en volume d'utilisation illustrée en figures 4 et 5, et de deux parois latérales transversales 4, 5 parallèles entre elles et opposées. Selon le mode de réalisation particulier illustrant l'invention, dans la configuration à plat de stockage (figure 1), les deux parois latérales longitudinales 2, 3 sont en position rabattue à plat vers l'extérieur dans le plan moyen défini par ledit cadre 1 et les deux autres parois latérales transversales 4, 5 étant en position rabattue à plat vers l'intérieur dans ledit plan moyen.

Les parois latérales 2, 3, 4, 5 sont moulées à plat de manière à pouvoir dresser lesdites parois par rapport audit plan moyen pour former ledit conduit du guide d'air orienté selon une composante normale audit plan moyen, en les rendant mobiles par rapport au cadre 1 grâce à des charnières 200, 300, 400, 500, moulées respectivement entre les parois et le cadre, qui solidarisent lesdites parois au cadre, lesdites charnières se présentant sous forme de zones d'épaisseur réduite par rapport à l'épaisseur globale desdites parois. Ces zones forment ainsi des lignes de pliage permettant de dresser les parois pour former le conduit du guide orienté selon une composante normale audit plan moyen défini par le cadre 1.

Ces parois dans leur position dressée par rapport au cadre définissent ainsi un conduit ouvert en ses deux extrémités guidant l'air entrant depuis la face avant du véhicule vers l'échangeur thermique R.

Selon le mode de réalisation représenté par cet exemple, chaque paroi longitudinale présente plusieurs parties : une partie principale et des extrémités mobiles transversalement par rapport à ladite partie principale afin de pouvoir être repliées respectivement contre la paroi transversale adjacente et d'y être solidarisée par des moyens de verrouillage. Selon la forme du guide, les extrémités de paroi peuvent se composer de plusieurs parties mobiles entre elles.

La paroi longitudinale 2 comprend ainsi une partie longitudinale principale 20, formant la paroi verticale dans sa configuration d'utilisation telle que représentée en figures 4 ou 5, et deux extrémités 21, 22 qui s'articulent transversalement par rapport à la partie principale 20 respectivement suivant une charnière 201, 202 moulée en une zone d'épaisseur moindre que le reste de la paroi, formant une zone de pliage afin de pouvoir être repliées respectivement contre la paroi transversale adjacente 4, 5 et d'y être solidarisée par des moyens de verrouillage.

La paroi longitudinale 30 comprend des parties extrêmes 31, 32 mobiles transversalement par rapport à ladite partie principale respectivement suivant une charnière 301, 302 moulée sous forme d'une zone de pliage d'épaisseur moindre que le reste de la paroi ; lesdites parties extrêmes se composant respectivement de deux parties mobiles entre elles transversalement 310, 311 ; 320, 321, suivant une charnière d'épaisseur réduite 3010, 3020, afin de pouvoir être repliées vers la paroi transversale adjacente, la partie le plus extrême 311, 321 venant contre la paroi transversale adjacente respective 4, 5 afin d'y être solidarisée par des moyens de verrouillage.

Ce mode de réalisation présente l'avantage de pouvoir facilement solidariser les parois latérales entre elles lors de la mise en volume du guide tout en conférant une bonne étanchéité contre les fuites d'air au conduit que forment lesdites parois latérales, afin que ledit guide remplisse efficacement sa fonction.

Avantageusement le guide d'air selon l'invention est tel que le cadre 1 support des parois comporte des butées positionnées sur ses montants afin de faciliter le positionnement des parois lors de la mise en volume dudit guide. Selon cet exemple particulier, les butées se présentent sous forme de longerons ou murets moulés avec les montants constitutifs du cadre 1. Sur les montants longitudinaux du cadre, les longerons 12, 13 forment butée respectivement pour les parois longitudinales 2, 3 et notamment des parties principales respectives 20 et 30, et sur les montants transversaux du cadre les longerons 14, 15 forment butée respectivement pour les parois transversales 4, 5, lorsqu'elles que lesdites parois sont relevées dans un plan sensiblement perpendiculaire au plan moyen du cadre.

Avantageusement encore, les parois et les butées peuvent comprendre des moyens de solidarisation de type mâle-femelle pour favoriser la tenue des parois dans leur configuration dressée lors de la mise en volume du guide. A titre d'exemple, comme illustré sur les figures 1, 2 ou 4 et 5, les butées comportent des moyens de retenue des parois sous forme de crochets de retenue ou d'encoches moulés. Par exemple, lorsque la partie 30 de la paroi longitudinale 3 est relevée vers l'intérieur du cadre, de manière sensiblement perpendiculaire au plan du cadre, les deux parties en saillie du crochet de retenue 130 vont venir s'encliqueter dans les orifices 60, 61 présents dans la paroi 30. De même le crochet de retenue 120 de la butée 12 va s'encliqueter dans les orifices réalisés dans la partie 20 de la paroi longitudinale 2. Entre les parois transversales 4, 5 et les butées correspondantes, est prévu selon l'exemple un système mâle-femelle de nervures sur les parois 4, 5 qui vont s'encliqueter respectivement dans les encoches creusées dans les butées 14, 15.

En ce qui concerne les modes de verrouillage entre les parois elles-mêmes, divers moyens peuvent convenir. Les figures 3A et 3B illustrent respectivement un verrouillage entre une paroi transversale 4 contre laquelle est repliée l'extrémité 311 d'une paroi longitudinale 3 et en éclaté le détail du bouton de verrouillage qui peut être utilisé suivant l'invention pour permettre un verrouillage facile et rapide des parois entre elles. Selon cet exemple, le bouton de verrouillage comporte une partie en saillie 34 présent sur l'extrémité de paroi 311, plus particulièrement aux extrémités mobiles de ces parois, qui vient s'encliqueter dans un orifice 43 présent sur la paroi transversale adjacente 4. Cet exemple de bouton de verrouillage n'est pas limitatif de l'invention, des boutons d'un autre type ou d'autres types d'éléments de verrouillage pouvant être utilisés dans la mesure où ils sont faciles d'emploi tout en permettant un verrouillage solide.

Selon un mode de réalisation préféré de l'invention, le cadre 1 comprend en outre des moyens de fixation 10, 11 moulés à plat avec ledit cadre. Selon l'exemple, lesdits moyens sont présents en deux extrémités opposées du cadre pour permettre la fixation du guide d'air sur l'élément structurel récepteur tel que l'échangeur R représenté aux figures 4 ou 5. Ces moyens de fixation ou partie de ces moyens 11 s'articulent par rapport au cadre, par pivotement suivant une charnière 110 moulée en une épaisseur réduite par rapport à l'épaisseur du cadre, solidarisant lesdits moyens de fixation audit cadre et, pour être orientés d'une position à plat jusqu'à une position adéquate pour être clipés sur l'échangeur thermique R.

Le guide d'air selon l'invention présente donc l'avantage de pouvoir être fabriqué, par exemple par moulage d'un matériau plastique, sous forme d'un monobloc dans sa configuration à plat. Les moyens de verrouillage pour solidariser les parois entre elles peuvent être moulés directement avec les parois ou réalisés séparément dans des compartiments spécifiques du moule puis rapportés sur les parois. Avantageusement aussi les moyens de fixation du cadre sur l'élément récepteur dudit guide d'air sont moulés également en même temps solidairement au cadre du guide d'air.

L'invention a atteint ses objectifs. En effet cette configuration à plat du guide d'air selon l'invention permet d'utiliser un moule de faible encombrement, un stockage aisé des guides, une capacité d'empilage élevée dans des cartons lors du transport des guides. Toutes les parties composant le guide étant solidarisées les unes aux autres dans sa configuration à plat, il est aisé de passer ensuite à la mise en volume du guide par de simples manipulations en dressant et agençant les parois latérales selon les charnières formées par des lignes de pliage d'épaisseur réduite par rapport à l'épaisseur globale des parois, et par encliquetage des divers moyens de verrouillage ou de retenue entre les parois elles-mêmes et entre les parois et le cadre de fixation support des parois, le cadre servant de référence pour la mise en volume avec ses butées de positionnement des parois qui facilitent cette mise en volume.

De plus les charnières, notamment celles formant les diverses zones de pliage entre les parois et le cadre du guide sont réalisées dans une épaisseur moindre que l'épaisseur du reste des parois et avantageusement dans une épaisseur suffisamment fine pour que ces zones puissent se déchirer lors d'un choc frontal ou de biais reçu par le véhicule, de sorte que le guide d'air dans son utilisation puisse satisfaire aux « crashs tests » auxquels sont habituellement soumis les véhicules automobiles.

## Revendications

1. Guide d'air destiné à être intégré à l'avant d'un véhicule entre une face avant dudit véhicule et un échangeur thermique dudit véhicule, ledit guide d'air (A) présente un cadre de fixation (1) définissant un plan moyen et une pluralité de parois (2 ,3, 4, 5) solidaires dudit cadre de fixation pour former un conduit orienté selon une composante normale audit plan moyen, lesdites parois étant moulées à plat d'une seule pièce avec ledit cadre de fixation selon ledit plan moyen, de manière à pouvoir dresser lesdites parois par rapport audit plan moyen pour former ledit conduit, **caractérisé en ce qu'**au moins une desdites parois présente une partie principale (20, 30) prolongée par au moins une extrémité (21, 22 ; 31, 32) mobile par rapport à ladite partie principale de manière à être repliée vers une autre paroi qui lui est adjacente une fois dressée.

2. Guide d'air selon la revendication 1, **caractérisé en ce que** chacune desdites parois est dressée par rapport audit plan moyen par pivotement autour d'une zone d'épaisseur réduite par rapport à l'épaisseur globale de ladite paroi formant une charnière moulée (200, 300, 400, 500) entre ledit cadre et la paroi.

3. Guide d'air selon l'une des revendications 1 à 2, **caractérisé en ce que** ladite extrémité de paroi est mobile par rapport à ladite partie principale de paroi par pivotement autour d'une zone d'épaisseur réduite par rapport à l'épaisseur globale de ladite paroi formant une charnière moulée (302, 3020, 301, 3010) entre ladite extrémité et la partie principale de paroi.

4. Guide d'air selon l'une des revendications précédentes, **caractérisé en ce que** lesdites parois (2, 3, 4, 5) dressées pour former ledit conduit sont solidarisées entre elles deux à deux par des moyens de verrouillage (34, 43) assemblant deux parois adjacentes.

5. Guide d'air selon l'une des revendications précédentes, **caractérisé en ce que** ledit cadre (1) comporte entre outre des butées de positionnement (12, 13,14, 15) desdites parois (2, 3, 4, 5) dans leur position dressée respective.

6. Guide d'air selon la revendication 5, **caractérisé en ce que** lesdites butées sont munies de moyens de retenue (120, 130) des parois avec ledit cadre.

7. Guide d'air selon l'une des revendications 5 ou 6, **caractérisé en ce que** lesdites butées de positionnement (12, 13, 14, 15) se présentent sous forme de longerons ou murets moulés le long des montants formant ledit cadre (1).

8. Guide d'air selon l'une des revendications 2 à 7, **caractérisé en ce qu'**au moins lesdites charnières moulées entre les parois et le cadre sont d'une épaisseur suffisamment fine pour leur permettre d'être déchirées sous l'effet d'un choc frontal ou de biais.

9. Guide d'air selon l'une des revendications précédentes, **caractérisé en ce que** ledit cadre de fixation comporte des moyens de fixation (10, 11) moulés à plat d'une seule pièce avec ledit cadre de fixation selon ledit plan moyen, de manière à pouvoir orienter lesdits moyens de fixation lors de son intégration en face avant d'un véhicule.

10. Guide d'air selon la revendication 9, **caractérisé en ce que** lesdits moyens de fixation s'orientent par pivotement autour d'une zone d'épaisseur réduite par rapport à l'épaisseur globale du cadre formant une charnière moulée (110) entre ledit cadre et lesdits moyens de fixation (11).

11. Véhicule automobile comprenant au moins un guide d'air décrit à l'une des revendications précédentes.

## Patentansprüche

1. Luftführung, welche dafür vorgesehen ist, in das Vorderteil eines Fahrzeugs zwischen einer Frontfläche des Fahrzeugs und einem Wärmetauscher des Fahrzeuges integriert zu werden,
wobei die Luftführung (A) einen Befestigungsrahmen (1), welcher eine mittlere Ebene definiert, und eine Vielzahl von Wänden (2, 3, 4, 5) aufweist, welche mit dem Befestigungsrahmen fest verbunden sind, um einen Kanal zu bilden, welcher gemäß einer Komponente senkrecht zu der mittleren Ebene ausgerichtet ist, wobei die Wände flach, aus einem einzigen Stück mit dem Befestigungsrahmen gemäß der mittleren Ebene derartig abgeformt sind, um die Wände in Bezug auf die mittlere Ebene aufrichten zu können, um den Kanal zu bilden,
**dadurch gekennzeichnet,**
**dass** mindestens eine der Wände einen Hauptteil (20, 30) aufweist, welcher durch mindestens ein in Bezug auf den Hauptteil bewegliches Ende (21, 22; 31, 32) derartig verlängert wird, um in Richtung auf eine andere Wand angewinkelt zu werden, welche daran angrenzt, wenn sie aufgerichtet ist.

2. Luftführung nach Anspruch 1, **dadurch gekennzeichnet, dass** jede Wand in Bezug auf die mittlere Ebene durch Schwenken um einen Bereich mit verringerter Dicke in Bezug auf die Gesamtdicke der Wand herum, welcher ein abgeformtes Scharnier (200, 300, 400, 500) zwischen dem Rahmen und der Wand bildet, aufgerichtet wird.

3. Luftführung nach einem der Ansprüche 1 bis 2, **dadurch gekennzeichnet, dass** das Wandende in Bezug auf den Hauptwandteil durch Schwenken um einen Bereich mit verringerter Dicke in Bezug auf die Gesamtdicke der Wand, welcher ein abgeformtes Scharnier (302, 3020, 301, 3010) zwischen dem Ende und dem Hauptwandteil bildet, beweglich ist.

4. Luftführung nach einem der vorhergehenden Ansprüche, **dadurch gekennzeichnet, dass** die Wände (2, 3, 4, 5), welche aufgerichtet sind, um den Kanal zu bilden, durch Verriegelungsmittel (34, 43), welche zwei benachbarte Wände zusammenfügen, paarweise fest miteinander verbunden sind.

5. Luftführung nach einem der vorhergehenden Ansprüche, **dadurch gekennzeichnet, dass** der Rahmen (1) darüber hinaus Anschläge zur Positionierung (12, 13, 14, 15) der Wände (2, 3, 4, 5) in ihrer jeweilige aufgerichteten Position umfasst.

6. Luftführung nach Anspruch 5, **dadurch gekennzeichnet, dass** die Anschläge mit Mitteln zum Festhalten (120, 130) der Wände an dem Rahmen versehen sind.

7. Luftführung nach einem der Ansprüche 5 oder 6, **dadurch gekennzeichnet, dass** die Positionierungsanschläge (12, 13, 14, 15) sich in Form von entlang der den Rahmen (1) bildenden Stützen abgeformten Längsträgern oder Mäuerchen darstellen.

8. Luftführung nach einem der Ansprüche 2 bis 7, **dadurch gekennzeichnet, dass** zumindest die zwischen den Wänden und dem Rahmen abgeformten Scharniere von einer ausreichend geringen Dicke sind, um es ihnen zu ermöglichen, unter der Einwirkung eines Frontal- oder Schrägaufpralls auseinander gerissen zu werden.

9. Luftführung nach einem der vorhergehenden Ansprüche, **dadurch gekennzeichnet, dass** der Befestigungsrahmen Befestigungsmittel (10, 11) umfasst, welche flach, aus einem einzigen Stück mit dem Befestigungsrahmen gemäß der mittleren Ebene derartig abgeformt sind, um die Befestigungsmittel bei dessen Integration in die Frontfläche eines Fahrzeugs ausrichten zu können.

10. Luftführung nach Anspruch 9, **dadurch gekennzeichnet, dass** sich die Befestigungsmittel durch Schwenken um einen Bereich mit verringerter Dicke in Bezug auf die Gesamtdicke des Rahmens herum, welcher ein abgeformtes Scharnier (110) zwischen dem Rahmen und den Befestigungsmitteln (11) bildet, ausrichten.

11. Kraftfahrzeug, aufweisend mindestens eine Luftführung, welche nach einem der vorhergehenden Ansprüche beschrieben ist.

## Claims

1. Air guide designed to be integrated at the front of a vehicle between a front face of said vehicle and a heat exchanger of said vehicle, said air guide (A) has an attachment frame (1) defining a median plane and a plurality of walls (2, 3, 4, 5) secured to said attachment frame so as to form a duct oriented along a component normal to said median plane, said walls being flat-moulded in one piece with said attachment frame in said median plane, so as to be able to raise said walls relative to said median plane to form said duct, **characterized in that** at least one of said walls has a main part (20, 30) extended by at least one end (21, 22; 31, 32) that is mobile relative to said main part so as to be folded back towards another wall that is adjacent thereto once raised.

2. Air guide according to Claim 1, **characterized in that** each one of said walls is raised relative to said median plane by pivoting about a region of reduced thickness, compared to the overall thickness of said wall, forming a moulded hinge (200, 300, 400, 500) between said frame and the wall.

3. Air guide according to either of Claims 1 and 2, **characterized in that** said wall end is able to move relative to said main wall part by pivoting about a region of reduced thickness, compared to the overall thickness of said wall, forming a moulded hinge (302, 3020, 301, 3010) between said wall end and the main wall part.

4. Air guide according to one of the preceding claims, **characterized in that** said walls (2, 3, 4, 5) raised to form said duct are secured to one another in pairs by locking means (34, 43) that join two adjacent walls.

5. Air guide according to one of the preceding claims, **characterized in that** said frame (1) further comprises stops (12, 13, 14, 15) for positioning said walls (2, 3, 4, 5) in their respective raised position.

6. Air guide according to Claim 5, **characterized in that** said stops are provided with means (120, 130) for retaining the walls with said frame.

7. Air guide according to either of Claims 5 and 6, **characterized in that** said positioning stops (12, 13, 14, 15) take the form of longerons or parapets moulded along the uprights forming said frame (1).

8. Air guide according to one of Claims 2 to 7, **characterized in that** at least one of said moulded hinges between the walls and the frame are sufficiently thin that they can be torn under the effect of a frontal or oblique impact.

9. Air guide according to one of the preceding claims, **characterized in that** said attachment frame comprises attachment means (10, 11) flat-moulded in one piece with said attachment frame in said median plane, so as to be able to orient said attachment means when it is integrated into the front face of a vehicle.

10. Air guide according to Claim 9, **characterized in that** said attachment means are oriented by pivoting about a region of reduced thickness, compared to the overall thickness of the frame, forming a moulded hinge (110) between said frame and said attachment means (11).

11. Motor vehicle comprising at least one air guide described in one of the preceding claims.
